# EUROPÄISCHE PATENTSCHRIFT

(11) **EP 1 422 131 B1**
(45) Veröffentlichungstag und Bekanntmachung des Hinweises auf die Patenterteilung: **14.01.2009**
(21) Anmeldenummer: 03026482.4
(22) Anmeldetag: 20.11.2003
(51) Int. Cl.: B62D 65/00, B60J 7/00

(54) **Dachmodul für ein Kraftfahrzeug**
Roof module for motor vehicle
Module de pavillon pour véhicule automobile

(30) Priorität: 22.11.2002 FR 0214639
(43) Veröffentlichungstag der Anmeldung: 26.05.2004
(73) Patentinhaber: Webasto AG, 82131 Stockdorf (DE)
(72) Erfinder: Guicheteau, Jean-Luc, 49300 Cholet (FR)

(56) Entgegenhaltungen:
- EP-A- 0 203 484
- DE-C- 19 902 534
- FR-A- 2 786 735

## Beschreibung

Die vorliegende Erfindung betrifft ein Dachmodul, das im wesentlichen aus einer lichtdurchlässigen Scheibe und einer integrierten Verdunkelungsvorrichtung besteht und dafür vorgesehen ist, durch Verkleben mit dem oberen Teil einer geschlossenen Karosserie eines Kraftfahrzeuges fest verbunden zu werden.

Es ist bekannt, daß das Dach eines Kraftfahrzeugs wenigstens teilweise aus einer lichtdurchlässigen, d.h. durchscheinenden bzw. durchsichtigen Scheibe, bestehen kann. Diese Scheibe, die im allgemeinen aus Glas hergestellt wird, ist in der Weise dimensioniert und ausgebildet, daß sie eine in der Dachhaut des Kraftfahrzeuges angebrachte Öffnung zu verschließen vermag. Konkret wird die Öffnung durch eine Auflagefläche begrenzt, welche zur Aufnahme des Umfangsrandes der Scheibe geeignet ist. In an sich bekannter Weise erfolgt die Montage vorteilhafterweise durch Verkleben.

In der Praxis wird diese Art von mehr oder weniger transparentem Dach üblicherweise in Kombination mit einer Vorrichtung zur Verdunkelung des Tageslichtes verwendet, welche geeignet ist, parallel zur Innenfläche der Glasscheibe ausgefahren zu werden. Zweck der Verdunkelungsvorrichtung ist es, die Lichtstrahlen, die durch die Glasscheibe. hindurchtreten, daran zu hindern, sich im Fahrgastraum zu verbreiten. Ziel ist dabei selbstverständlich eine Begrenzung des Treibhauseffekts im Fahrzeuginneren an Tagen mit starker Sonneneinstrahlung.

Es wird daran erinnert, daß eine Verdunkelungsvorrichtung normalerweise aus Verdunkelungsmitteln vom bekannten Typ besteht, die für die Bewegung zwischen einer geöffneten Stellung und einer geschlossenen Stellung beweglich montiert sind. Ebenso können die Verdunkelungsmittel durch eine oder mehrere bewegliche Platten oder beispielsweise durch einen Vorhang mit Aufrollvorrichtung gebildet werden. Das Ganze ist so angeordnet, daß die Verdunkelungsmittel in der geöffneten Stellung in Unterbringungsmitteln enthalten sind, welche in direkter Nähe der Öffnung und mindestens zu ihrem größten Teil außerhalb des unter dem nutzbaren Teil der Scheibe gelegenen Raums, d.h. also des Teils, der gegenüber der genannten Öffnung positioniert ist, angeordnet sind. In geschlossener Stellung können die Verdunkelungsmittel dagegen durch Führungsmittel parallel zur Innenfläche der Glasscheibe und insbesondere unter dem vorstehend definierten nutzbaren Teil ausgefahren werden.

In der industriellen Fertigung hat sich herausgestellt, daß die Montage der Verdunkelungsvorrichtung nach dem Verkleben der Glasscheibe an dem oberen Teil der Karosserie einen Arbeitsgang darstellte, der relativ schwer umzusetzen ist, dies insbesondere aufgrund der großen Zahl von voneinander abhängigen, die genannte Verdunkelungsvorrichtung bildenden Einzelteilen: Verdunkelungsmittel, Unterbringungsmittel, Führungsmittel, Antriebsmittel, wenn die Bewegung der genannten Verdunkelungsmittel mechanisiert wurde, Steuermittel usw.

Um dieser Schwierigkeit abzuhelfen, wurde daran gedacht, auf eine funktionelle Untereinheit zurückzugreifen, welche gleichzeitig die Glasscheibe und die Verdunkelungsvorrichtung zusammenfaßt; das Ganze stellt sich dann in Form eines vollständigen Moduls dar, welches geeignet ist, in einem Block am oberen Teil der Karosserie des betreffenden Kraftfahrzeuges montiert zu werden.

Wenn diese modulare Konzeption es auch vorteilhafterweise ermöglicht, die Montage der Verdunkelungsvorrichtung von der eigentlichen Montage des Kraftfahrzeuges zu trennen, so gilt doch weiterhin, daß die Anbringung eines solchen Dachmoduls einen besonders komplizierten Arbeitsvorgang darstellt. Der Hauptgrund dafür liegt darin, daß der Platzbedarf der Verdunkelungsvorrichtung dazu zwingt, mit dem Dachmodul eine relativ komplexe Bewegung der Heranführung an die Öffnung auszuführen, wenn das genannte Modul am oberen Teil der Karosserie montiert wird. Aufgrund seines Aufbaus, der eine periphere Positionierung der Einzelteile relativ zur Öffnung erfordert, und insbesondere aufgrund des Vorhandenseins von Unterbringungsmitteln, die dafür vorgesehen sind, sich über den unter der genannten Öffnung liegenden Raum hinaus zu erstrecken, erweist sich die Verdunkelungsvorrichtung als sehr sperrig bezogen auf die Größe der Öffnung, durch die sie bei der Montage des Dachmoduls hindurchgeführt werden muß. Diese Eigenschaft erfordert entsprechend eine Montage nach einer schräg verlaufenden Richtung, um das Einführen der Verdunkelungsvorrichtung durch die Öffnung und insbesondere das Verschieben der Unterbringungsmittel unter den hinteren Teil der Dachhaut, in der die genannte Öffnung angebracht ist, zu ermöglichen.

Abgesehen von der Komplexität der Umsetzung im industriellen Umfeld ist im übrigen diese schräge Heranführungsbewegung mit einer effizienten Verklebung der Glasscheibe nicht zu vereinbaren. Es ist in der Tat auf dem Gebiet des Verklebens gut bekannt, daß eine Klebewulst unbedingt vertikal komprimiert werden muß, damit die Montage zuverlässig ist. Erfolgt dies nicht, besteht bei jeder schrägen Heranführung der miteinander fest zu verbindenden Teile die Gefahr, daß ein Ausbreiten und/oder ein Gleiten der Klebewulst erfolgt, welches geeignet ist, die Verklebung ineffizient zu gestalten.

Druckschrift FR 2 786 735 gemäß dem Oberbegriff des Anspurches 1, beschreibt ein Dachmodulsystem umfassend eine Verdunkelungsvorrichtung zur Montage in einem Kraftfahrzeugdach, wobei die Verdunkelungsvorrichtung in Unterbringungsmitteln enthalten ist. Die Unterbringungsmittel können in einer Montagestellung und einer Betriebsstellung positioniert werden.

Druckschrift DE 19902534 C1 beschreibt ein Fahrzeugdach mit einer Dachöffnung, unterhalb welcher eine Verdunkelungsvorrichtung angeordnet ist.

Entsprechend liegt das durch den Gegenstand der vorliegenden Erfindung zu lösende technische Problem darin, ein Dachmodul vorzuschlagen, welches einerseits eine lichtdurchlässige Scheibe umfaßt, welche dafür vorgesehen ist, eine in den oberen Teil einer geschlossenen Karosserie eines Kraftfahrzeuges angebrachte Öffnung zu verschließen, und andererseits eine Verdunkelungsvorrichtung umfaßt, welche mit der Scheibe fest verbunden und geeignet ist, parallel zur Innenfläche der genannten Scheibe eingesetzt zu werden, wobei die Verdunkelungsvorrichtung Verdunklungsmittel umfaßt, die für eine Bewegung zwischen einer geöffneten Stellung, bei der sie in den Unterbringungsmitteln enthalten sind, und einer geschlossenen Stellung, bei der sie entlang von Führungsmitteln ausgefahren werden, beweglich montiert sind, wobei das Dachmodul es erlauben soll, die Probleme nach dem Stand der Technik zu vermeiden, indem insbesondere eine wesentlich verbesserte erleichterte Montage geboten wird, wobei gleichzeitig eine zuverlässige Verklebung der Glasscheibe am oberen Teil der Karosserie des Kraftfahrzeuges garantiert wird.

Erfingdungsgemäß besteht die Lösung des gestellten technischen Problems darin, daß die Unterbringungsmittel für eine Bewegung zwischen einer Montagestellung, bei der sie insgesamt unter dem genannten nutzbaren Teil der Scheibe positioniert sind, der dafür vorgesehen ist, an der Öffnung zu liegen zu kommen, und einer Betriebsstellung, bei der die genannten Unterbringungsmittel zumindest teilweise außerhalb des unter dem genannten nutzbaren Teil der Scheibe gelegenen Raums positioniert sind, beweglich montiert sind.

Die so definierte Erfindung bietet den Vorteil, eine Montage des Dachmoduls in einer im wesentlichen zum oberen Teil des Kraftfahrzeuges senkrechten Richtung zu erlauben. Während der Heranführung und bis zum Kontakt mit der Karosserie ist die lichtdurchlässige Scheibe in der Tat geeignet, im wesentlichen parallel zur Öffnung zu verbleiben. Wenn davon ausgegangen wird, daß das Dach eines Kraftfahrzeuges im wesentlichen horizontal verläuft, erfolgt das Einführen der Verdunkelungsvorrichtung durch die Öffnung dann durch einfaches vertikales Absenken des Dachmoduls. Abgesehen von dieser großen Einfachheit der Montage ermöglicht es die Erfindung im übrigen, ein optimales Verkleben der Scheibe zu garantieren, da während der genannten Annäherungsbewegung die Klebewulst vorteilhafterweise entsprechend einer im wesentlichen zu den betreffenden Auflageflächen senkrechten Achse komprimiert wird.

Die Erfindung betrifft des weiteren die Merkmale, welche sich aus der folgenden Beschreibung ergeben und die jeweils einzeln oder nach ihren sämtlichen technisch möglichen Kombinationen zu betrachten sind.

Diese als nicht einschränkendes Beispiel gegebene Beschreibung macht besser verständlich, wie die Erfindung realisiert werden kann, und in der Beschreibung wird auf die beigefügten Zeichnungen Bezug genommen. In den Zeichnungen zeigen
Figur 1 in der Perspektive von oben ein Dachmodul, das der Erfindung entspricht und dessen Unterbringungsmittel in der Montagestellung angeordnet sind;
Figur 2 eine zur Fig. 1 analoge Ansicht, wobei jedoch die Unterbringungsmittel in der Betriebsstellung angeordnet sind;
Fig. 3 eine Teilansicht der Verdunkelungsvorrichtung nach den Figuren 1 und 2, welche insbesondere die Verbindung zwischen den Unterbringungsmitteln und den Führungsmitteln zeigt, wenn sich die genannten Unterbringungsmittel in der Montagestellung befinden;
Fig. 4 eine zur Fig. 3 analoge Ansicht, die jedoch die Verbindung darstellt, wenn die Unterbringungsmittel in der Betriebsstellung befindlich sind;
Fig. 5 eine zusammenfassende Ansicht, welche verschiedene Phasen der Montage des Dachmoduls nach den Figuren 1 und 2 an einem Kraftfahrzeug zeigt.

Aus Gründen der Klarheit werden die jeweils gleichen Elemente mit identischen Bezugszeichen bezeichnet. Des weiteren werden lediglich die für das Verständnis der Erfindung wesentlichen Elemente dargestellt, wobei dies auch nicht maßstabgerecht und nur in schematischer Form erfolgte.

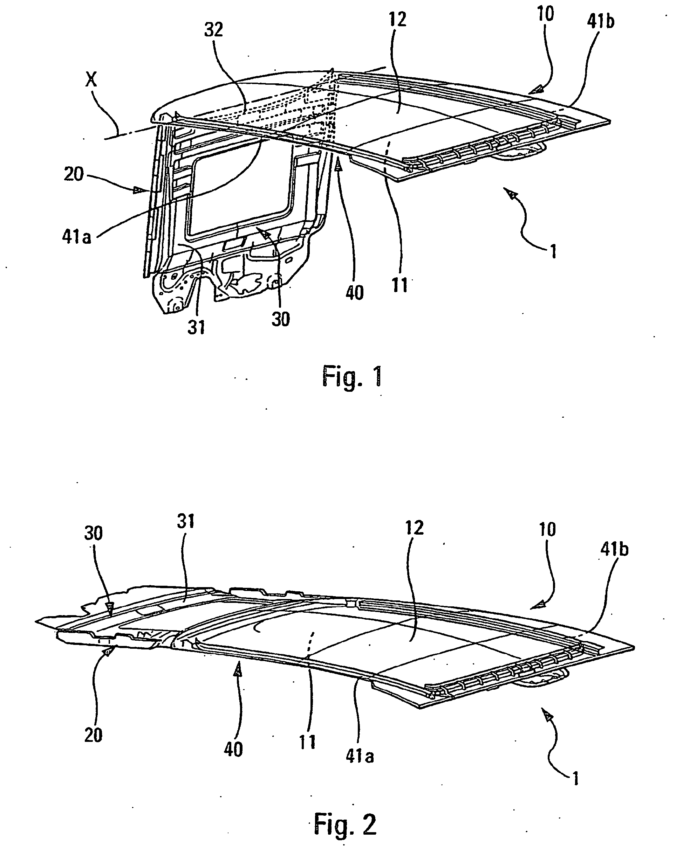

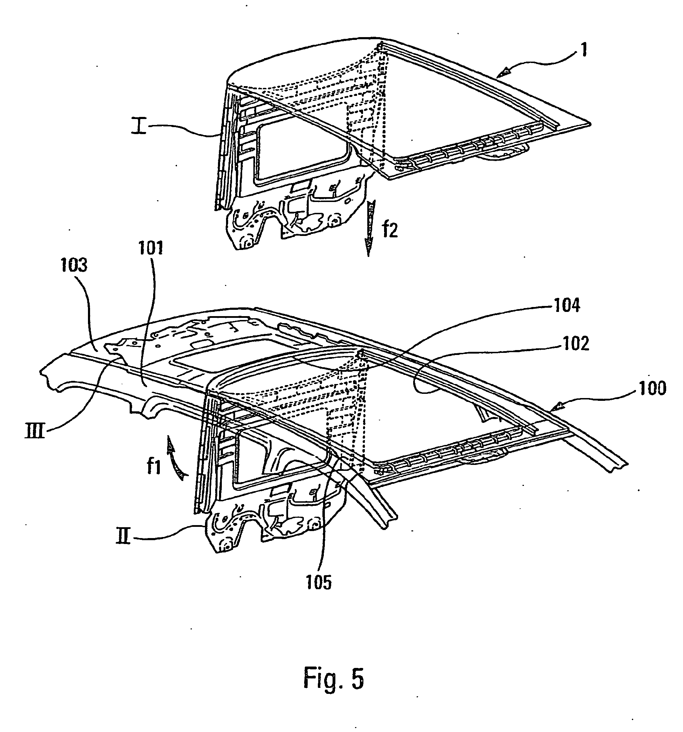

Fig. 1 zeigt ein Dachmodul 1, welches eine Glasscheibe 10 aufweist, an deren Innenfläche 11 eine Verdunkelungsvorrichtung 20 fest verbunden ist, welche parallel zu der genannten Innenfläche 11 eingesetzt werden kann. In an sich bekannter Weise ist die Glasscheibe 10 dazu bestimmt, mit dem oberen Teil 101 einer geschlossenen Karosserie eines Kraftfahrzeuges 100 in der Weise verklebt zu werden, daß eine in der Dachhaut 103 angebrachte Öffnung 102 verschlossen werden kann (Fig. 5). In ebenfalls an sich bekannter Weise weist die Verdunkelungsvorrichtung 20 Verdunkelungsmittel auf, die für eine Bewegung zwischen zwei Extrempositionen beweglich montiert sind, d.h. zwischen einer Öffnungsstellung, bei der die Verdunkelungsmittel in den Unterbringungsmitteln 30 enthalten sind, und einer geschlossenen Stellung, bei der die genannten Verdunkelungsmittel parallel zur Innenfläche 11 der Glasscheibe 10 durch Führungsmittel 40 ausgefahren werden.

In diesem Ausführungsbeispiel werden die Verdunkelungsmittel durch an sich bekannte bewegliche Platten gebildet, die aus dem einfachen Grund der Übersichtlichkeit halber in den verschiedenen Figuren nicht dargestellt wurden. Unabhängig davon stapeln sich die genannten beweglichen Platten in an sich bekannter Weise in den Unterbringungsmitteln 30, wenn sich die Verdunkelungsvorrichtung 20 in der Öffnungsstellung befindet. Dagegen erstrecken sich die beweglichen Platten in der geschlossenen Stellung in an sich bekannter Weise und im wesentlichen in koplanarer Form zwischen den Führungsmitteln 40 parallel zur Innenfläche 11 der Scheibe 10.

Entsprechend dem Gegenstand der vorliegenden Erfindung sind die Unterbringungsmittel 30 für eine Bewegung zwischen einer Montagestellung (Fig. 1) und einer Betriebsstellung (Fig. 2) beweglich montiert. Das Ganze ist in der Weise angeordnet, daß die Unterbringungsmittel 30 in der Montagestellung vollständig unter dem nutzbaren Teil 12 der Scheibe 10 angeordnet sind, d.h. also vertikal bezogen auf den Teil der Scheibe, der dazu bestimmt ist, unter der Öffnung 102 zu liegen zu kommen. In der Betriebsstellung dagegen ist das Ganze so konzipiert, daß die Unterbringungsmittel 30 zumindest teilweise außerhalb des unterhalb des genannten nutzbaren Teils 12 der Scheibe 10 liegenden Raums angeordnet sind, jedoch nach wie vor in der Nähe, so daß sie ihre Aufgabe erfüllen und damit das ordnungsgemäße Funktionieren der Verdunkelungsvorrichtung 20 sicherstellen können.

In besonders vorteilhafter Weise sind hier die Unterbringungsmittel 30 vollständig außerhalb des unter dem nutzbaren Teil 12 der Scheibe 10 gelegenen Raums 12 angeordnet, wenn sie sich in der Betriebsstellung befinden. Diese Eigenschaft ermöglicht es, die Öffnung 102 maximal freizugeben, wenn einmal das Dachmodul 1 in das Dach des Fahrzeuges 100 integriert ist.

Bei dieser derzeit bevorzugten Ausführungsform der Erfindung sind die Unterbringungsmittel 30 für eine Drehbewegung zwischen der Montagestellung und der Betriebsstellung, welche vorstehend beschrieben wurde (Pfeil f1 der Fig. 5), beweglich montiert. Diese Beweglichkeit erfolgt im übrigen entlang einer Achse X, welche relativ zur Scheibe 10 quer und qarallel liegt. Selbstverständlich könnte jede andere Form von Beweglichkeit unter der Voraussetzung in Betracht gezogen werden, daß die beiden Extrempositionen garantiert sind. Es wird beispielsweise an eine Montage mit Gleitbewegung der Unterbringungsmittel 30 parallel zur Innenfläche 11 der Scheibe 10 gedacht.

Nach einem vorteilhaften Erfindungsmerkmal, welches insbesondere in Fig. 1 zu sehen ist, erstrecken sich die Unterbringungsmittel 30 in im wesentlichen zur Scheibe 10 senkrechter Richtung, wenn sich die genannten Unterbringungsmittel 30 in der Montagestellung befinden. Natürlich könnte auch jede andere Neigung gewählt werden. Es ist jedoch klar, daß sich, insoweit als die Scheibe 10 grundsätzlich horizontal bewegt wird, eine vertikale Anordnung der Unterbringungsmittel 30 als besonders sinnvoll erweist, um die Wirkungen der Schwerkraft zu begrenzen und damit die mechanischen Beanspruchungen an diesem beweglichen Teil der Verdunkelungsvorrichtung 20 zu minimieren.

Nach einem weiteren vorteilhaften Erfindungsmerkmal, welches insbesondere in Fig. 2 zu sehen ist, erstrecken sich die Unterbringungsmittel 30 in im wesentlichen zur Scheibe 10 paralleler Weise, wenn sich die genannten Unterbringungsmittel 30 in der Betriebsstellung befinden. Die Vorgabe ist hier einfach, eine im wesentlichen lineare Bewegung der beweglichen Platten von ihrem Unterbringungsbereich bis zu ihrem Ausfahrbereich zu ermöglichen. Es ist weiterhin wichtig, daß die Verdunkelungsvorrichtung 20 optimal in den Innenraum des Kraftfahrzeuges 100 integriert wird und dabei nur einen minimalen Platz beansprucht.

Die Positionierung der Schwenkachse X der Unterbringungsmittel 30 wird vorzugsweise in der Weise gewählt, daß sie direkt in der Nähe des hinteren Querrandes 104 liegt, welcher die Öffnung 102 begrenzt, wenn die Scheibe 10 mit dem oberen Teil 101 der Karosserie des Kraftfahrzeuges 100 fest verbunden wird. Diese Eigenschaft ermöglicht es in vorteilhafter Weise, daß die Unterbringungsmittel 30 in im wesentlichen zur Scheibe 10 senkrechter Form positioniert werden können, wenn sie sich in der Montagestellung befinden, wobei sie gleichzeitig den unterhalb des nutzbaren Teils 12 der genannten Scheibe 10 gelegenen Raum nicht übermäßig beanspruchen, wenn sich die genannten Unterbringungsmittel 30 in der Betriebsstellung befinden.

Nach einem besonderen Erfindungsmerkmal sind die Unterbringungsmittel 30 im übrigen für eine Schwenkbewegung direkt relativ zu den Führungsmitteln 40 beweglich montiert, dies insbesondere an ihren Enden. Diese Besonderheit ermöglicht eine vorteilhafte Vereinfachung der Struktur der Verdunkelungsvorrichtung 20, denn die Unterbringungsmittel 30 benötigen keine besonderen Verankerungspunkte an der Innenfläche 11 der Scheibe 10. Die Führungsmittel 40 sind mit der Scheibe 10 fest verbunden und dienen als Stütze für eine gelenkige Montage der Unterbringungsmittel 30.

Bei diesem Ausführungsbeispiel bestehen die Unterbringungsmittel 30 aus einer tiefgezogenen und mit Aussparungen versehenen Scheibe 31, welche eine Aufnahme bildet und die in der Schwenkbewegung auf der Höhe ihrer vorderen Querkante 32 an den hinteren Enden von zwei die Führungsmittel 40 bildenden Längsschienen 41 a, 41b beweglich montiert ist. Es ist anzumerken, daß die genannten Führungsschienen 41 a, 41 b in an sich bekannter Weise auf der Höhe der Seitenkanten der Glasscheibe 10 fest verbunden werden.

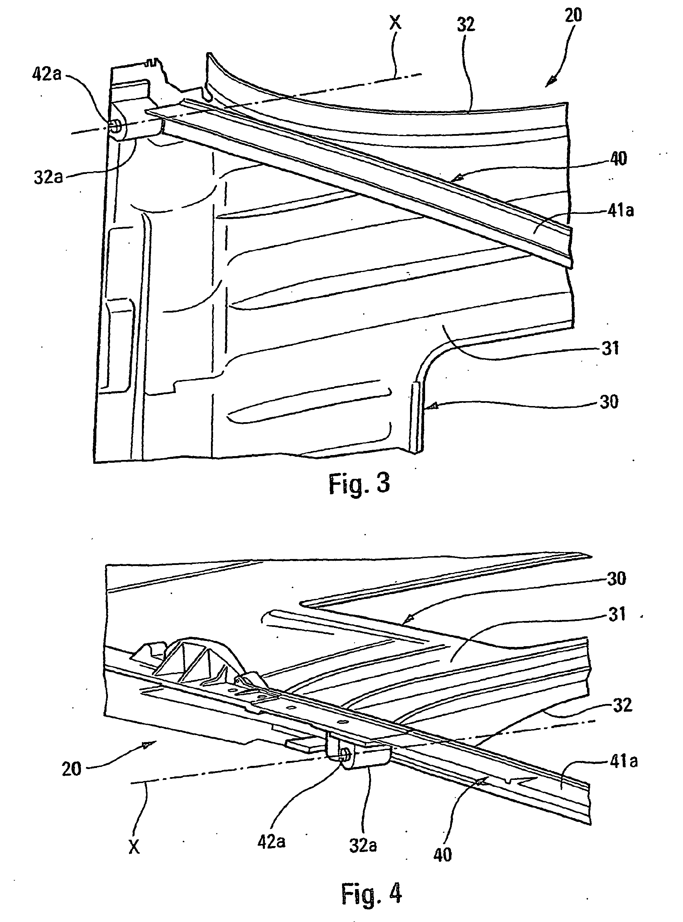

Die Figuren 3 und 4 zeigen detaillierter die schwenkbare Verbindung zwischen den Unterbringungsmitteln 30 und den Führungsmitteln 40. Es ist zu sehen, daß diese Verbindung hier über zwei Stäbe erfolgt, die Scharnierstifte 42a, 42b bilden, welche jeweils mit den hinteren Enden der Führungsschienen 41 a, 41 b verbunden sind. Das Ganze ist so gestaltet, daß die genannten Scharnierstifte 42a, 42b in der Rotation mit zwei Bohrungen zusammenwirken, welche Lager 32a, 32b bilden, die jeweils an den Enden des vorderen Querrandes 32 der mit Aussparungen versehenen Scheibe 31 angeordnet sind. Jede andere Form von bekannten Gelenkmitteln, wie z.B. Scharniere, könnte natürlich in äquivalenter Weise verwendet werden.

Nach einem weiteren besonderen Erfindungsmerkmal weist das Dachmodul 1 Verriegelungsmittel auf, welche die Unterbringungsmittel 30 in der Montagestellung zu blockieren vermögen. Dies ermöglicht eine Handhabung des Dachmoduls 1, ohne befürchten zu müssen, daß es zu unbeabsichtigten Bewegungen der Unterbringungsmittel 30 kommt, was ihre Anbringung am oberen Teil 101 der Karosserie stark erleichtert.

Nach einem vorteilhaften Erfindungsmerkmal sind die Verriegelungsmittel außerdem geeignet, die Unterbringungsmittel 30 in der Betriebsstellung zu blockieren. Diese Besonderheit vermag die Befestigung des Dachmoduls 1 am oberen Teil 101 der Karosserie dadurch zu erleichtern, daß eine vorübergehende Blockierung der Unterbringungsmittel 30 in der Betriebsstellung solange erfolgt, bis sie definitiv über beispielsweise Befestigungsschrauben verankert werden.

Bei dieser besonderen Ausführungsform besteht die lichtdurchlässige Scheibe 10 aus Glas. Es ist jedoch offensichtlich, daß jedes andere durchscheinende oder lichtdurchlässige Material, wie z.B. ein Plastikmaterial, durchaus in äquivalenter Weise verwendet werden könnte.

Natürlich bezieht sich die Erfindung auch auf ein Kraftfahrzeug 100, welches ein Dachmodul 1 wie vorstehend beschrieben aufweist.

Die Erfindung betrifft schließlich ein Montageverfahren für ein solches Dachmodul 1 am oberen Teil 101 der Karosserie eines Kraftfahrzeuges 100. So, wie dies schematisch in Fig. 5 dargestellt wird, ist dieses Verfahren insofern bemerkenswert, als es Verfahrensschritte aufweist, die aus folgendem bestehen:
- Positionieren der Unterbringungsmittel 30 in der Montagestellung (Position I),
- Heranführen des Dachmoduls 1 an den oberen Teil 101 der Karosserie, wobei die Scheibe 10 im wesentlichen zur Auflagefläche 105, die für ihre Aufnahme bestimmt ist, parallel gehalten wird (Pfeil f2),
- Einführen der Unterbringungsmittel 30 in die Öffnung 102 nach einer im wesentlichen zu der durch die genannte Öffnung 102 verlaufenden Ebene senkrechten Richtung, bis die Scheibe 10 mit der Auflagefläche 105 in Kontakt kommt (Position II),
- festes Verbinden der Scheibe 10 an der Auflagefläche 105 durch Verkleben,
- Kippen der Unterbringungsmittel 30 in die Betriebsstellung (Position III),
- Blockieren der Unterbringungsmittel 30 relativ zur Karosserie des Kraftfahrzeuges 100.

In besonders vorteilhafter Weise sind die Verdunkelungsmittel bei den verschiedenen Schritten der Montage des Dachmoduls 1 an dem oberen Teil 101 der Karosserie des Kraftfahrzeuges 100 in geöffneter Stellung angeordnet. Dies ermöglicht es, sie vor den Gefahren von Verschmutzungen oder Beschädigungen zu schützen, die der Handhabung bzw. der Montage des Dachmoduls 1 eigen sind.

## Patentansprüche

1. Dachmodul (1), welches einerseits eine lichtdurchlässige Scheibe (10), die dafür vorgesehen ist, eine an dem oberen Teil (101) einer geschlossenen Karosserie eines Kraftfahrzeuges (100) angebrachte Öffnung (102) zu verschließen, und andererseits eine Verdunkelungsvorrichtung (20) aufweist, welche mit der Scheibe (10) fest verbunden und geeignet ist, parallel zur Innenfläche (11) der genannten Scheibe (10) eingesetzt zu werden, wobei die Verdunkelungsvorrichtung (20) Verdunklungsmittel umfaßt, die für eine Bewegung zwischen einer geöffneten Stellung, bei der sie in den Unterbringungsmitteln (30) enthalten sind, und einer geschlossenen Stellung, bei der sie entlang von Führungsmitteln (40) ausgefahren sind, beweglich montiert sind, wobei die Unterbringungsmittel (30) für eine Bewegung zwischen einer Montagestellung, bei der sie insgesamt unterhalb des genannten nutzbaren Teils (12) der Scheibe (10) positioniert sind, der dafür vorgesehen ist, an der Öffnung (102) zu liegen zu kommen, und einer Betriebsstellung beweglich montiert sind, bei der die genannten Unterbringungsmittel (30) zumindest teilweise außerhalb des unter dem genannten nutzbaren Teil (12) der Scheibe (10) gelegenen Raums positioniert sind **dadurch gekennzeichnet, daß** das Dachmodul Verriegelungsmittel aufweist, welche die Unterbringungsmittel (30) in der Montagestellung zu blockieren vermögen.

2. Dachmodul (1) nach Anspruch 1, **dadurch** gekennzeichet, daß die Unterbringungsmittel (30) in der Betriebsstellung insgesamt außerhalb des unter dem genannten nutzbaren Teil (12) der Scheibe (10) gelegenen Raums positioniert sind.

3. Dachmodul (1) nach Anspruch 1 oder 2, **dadurch gekennzeichnet, daß** die Unterbringungsmittel (30) für eine Schwenkbewegung zwischen der Montagestellung und der Betriebsstellung um eine Achse (X), welche relativ zur Scheibe (10) quer und parallel liegt, beweglich montiert sind.

4. Dachmodul (1) nach einem der Ansprüche 1 bis 3, **dadurch gekennzeichnet, daß** sich die Unterbringungsmittel (30) in der Montagestellung in im wesentlichen zur Scheibe (10) senkrechter Weise erstrecken.

5. Dachmodul (1) nach einem der Ansprüche 1 bis 4, **dadurch gekennzeichnet, daß** sich die Unterbringungsmittel (30) in der Betriebsstellung in im wesentlichen zur Scheibe (10) paralleler Weise erstrecken.

6. Dachmodul (1) nach einem der Ansprüche 1 bis 5, **dadurch gekennzeichnet, daß** die Schwenkachse (X) der Unterbringungsmittel direkt in der Nähe des hinteren Querrandes (104) der Öffnung (102) gelegen ist, wenn die Scheibe (10) an dem oberen Teil (101) der Karosserie fest verbunden ist.

7. Dachmodul (1) nach einem der Ansprüche 1 bis 6, **dadurch gekennzeichnet, daß** die Unterbringungsmittel (30) für eine Schwenkbewegung am Ende der Führungsmittel (40) beweglich montiert sind.

8. Dachmodul (1) nach einem der Ansprüche 1 bis 7 **dadurch gekennzeichnet, daß** die Verriegelungsmittel außerdem die Unterbringungsmittel (30) in der Betriebsstellung zu blockieren vermögen.

9. Dachmodul (1) nach einem der Ansprüche 1 bis 8, **dadurch gekennzeichnet, daß** die lichtdurchlässige Scheibe (10) aus Glas besteht.

10. Kraftfahrzeug (100), **dadurch gekennzeichnet, daß** es ein Dachmodul (1) nach einem der vorstehenden Ansprüche umfaßt.

11. Verfahren für die Montage eines Dachmoduls (1) nach einem der Ansprüche 1 bis 10 an dem oberen Teil (101) einer Karosserie des Kraftfahrzeuges (100), **dadurch gekennzeichnet, daß** es Verfahrensschritte aufweist, die aus folgendem bestehen:
- Positionieren der Unterbringungsmittel (30) in der Montagestellung,
- Heranführen des Dachmoduls (1) an den oberen Teil (101) der Karosserie, wobei die Scheibe (10) im wesentlichen zur Auflagefläche (105), die für ihre Aufnahme bestimmt ist, parallel gehalten wird,
- Einführen der Unterbringungsmittel (30) in die Öffnung (102) nach einer im wesentlichen zu der durch die genannte Öffnung (102) verlaufenden Ebene senkrechten Richtung, bis die Scheibe (10) mit der Auflagefläche (105) in Kontakt kommt,
- festes Verbinden der Scheibe (10) an der Auflagefläche (105) durch Verkleben,
- Kippen der Unterbringungsmittel (30) in die Betriebsstellung,
- Blockieren der Unterbringungsmittel (30) relativ zur Karosserie des Kraftfahrzeuges (100).

12. Montageverfahren nach Anpruch 11, **dadurch gekennzeichnet, daß** die Verdunkelungsmittel bei den verschiedenen Verfahrensschritten der Montage des Dachmoduls (1) an dem oberen Teil (101) der Karosserie des Kraftfahrzeuges (100) in der geöffneten Stellung angeordnet sind.

## Claims

1. Roof module (1) which firstly has a light-permeable pane (10) which is provided for closing an opening (102) provided on the upper part (101) of a closed body of a motor vehicle (100), and secondly has an obscuring device (20) which is connected fixedly to the pane (10) and is suitable for use parallel to the inner surface (11) of the abovementioned pane (10), wherein the obscuring device (20) comprises obscuring means which are mounted movably for movement between an open position, in which they are contained in the accommodating means (30), and a closed position, in which they are extended along guide means (40), and wherein the accommodating means (30) are mounted movably for movement between an installation position, in which they are positioned in their entirety below the abovementioned usable part (12) of the pane (10), which part is provided so as to come to lie on the opening (102), and an operating position, in which the abovementioned accommodating means (30) are at least partially positioned outside the space positioned below the abovementioned usable part (12) of the pane (10), **characterized in that** the roof module has locking means which are capable of blocking the accommodating means (30) in the installation position.

2. Roof module (1) according to Claim 1, **characterized in that**, in the operating position, the accommodating means (30) are positioned in their entirety outside the space positioned under the abovementioned usable part (12) of the pane (10).

3. Roof module (1) according to Claim 1 or 2, **characterized in that** the accommodating means (30) are mounted movably for a pivoting movement between the installation position and the operating position about an axis (X) which lies transversely and parallel relative to the pane (10).

4. Roof module (1) according to one of Claims 1 to 3, **characterized in that**, in the installation position, the accommodating means (30) extend in a manner essentially perpendicular to the pane (10).

5. Roof module (1) according to one of Claims 1 to 4, **characterized in that**, in the operating position, the accommodating means (30) extend in a manner essentially parallel to the pane (10).

6. Roof module (1) according to one of Claims 1 to 5, **characterized in that** the pivot axis (X) of the accommodating means is positioned directly in the vicinity of the rear transverse edge (104) of the opening (102) when the pane (10) is connected fixedly to the upper part (101) of the body.

7. Roof module (1) according to one of Claims 1 to 6, **characterized in that** the accommodating means (30) are mounted movably for a pivoting movement at the end of the guide means (40).

8. Roof module (1) according to one of Claims 1 to 7, **characterized in that** the locking means are also capable of blocking the accommodating means (30) in the operating position.

9. Roof module (1) according to one of Claims 1 to 8, **characterized in that** the light-permeable pane (10) is composed of glass.

10. Motor vehicle (100), **characterized in that** it comprises a roof module (1) according to one of the preceding claims.

11. Method for the installation of a roof module (1) according to one of Claims 1 to 10 on the upper part (101) of a body of the motor vehicle (100), **characterized in that** it has method steps which comprise the following:
- positioning the accommodating means (30) in the installation position,
- guiding the roof module (1) to the upper part (101) of the body, with the pane (10) being essentially held parallel to the supporting surface (105) which is intended for holding it,
- introducing the accommodating means (30) into the opening (102) in a direction essentially perpendicular to the plane running through the abovementioned opening (102) until the pane (10) comes into contact with the supporting surface (105),
- fixedly connecting the pane (10) to the supporting surface (105) by adhesive bonding,
- tilting the accommodating means (30) into the operating position,
- blocking the accommodating means (30) relative to the body of the motor vehicle (100).

12. Installation method according to Claim 11, **characterized in that** the obscuring means are arranged in the open position during the various method steps for installing the roof module (1) on the upper part (101) of the body of the motor vehicle (100).

## Revendications

1. Module de toit (1) qui présente d'une part une vitre transparente à la lumière (10), prévue pour fermer une ouverture (102) pratiquée sur la partie supérieure (101) d'une carrosserie fermée d'un véhicule automobile (100), et d'autre part un dispositif d'assombrissement (20) qui est connecté fixement à la vitre (10) et qui est prévu pour être inséré parallèlement à la surface interne (11) de ladite vitre (10), le dispositif d'assombrissement (20) comprenant des moyens d'assombrissement qui sont montés de manière déplaçable pour permettre un mouvement entre une position ouverte dans laquelle ils sont contenus dans les moyens de montage (30) et une position fermée dans laquelle ils sont sortis le long de moyens de guidage (40), les moyens de montage (30) étant montés de manière déplaçable pour permettre un mouvement entre une position de montage dans laquelle ils sont positionnés dans l'ensemble sous ladite partie utile (12) de la vitre (10), qui est prévue pour venir s'appliquer contre l'ouverture (102), et une position fonctionnelle, dans laquelle lesdits moyens de montage (30) sont positionnés au moins en partie en dehors de l'espace situé sous ladite partie utile (12) de la vitre (10),
**caractérisé en ce que** le module de toit présente des moyens de verrouillage qui permettent de bloquer les moyens de montage (30) dans la position de montage.

2. Module de toit (1) selon la revendication 1, **caractérisé en ce que** les moyens de montage (30) sont positionnés dans la position fonctionnelle dans l'ensemble en dehors de l'espace situé sous ladite partie utile (12) de la vitre (10).

3. Module de toit (1) selon la revendication 1 ou 2, **caractérisé en ce que** les moyens de montage (30) sont montés de manière déplaçable pour permettre un mouvement de pivotement entre la position de montage et la position fonctionnelle suivant un axe (X) qui est transversal et parallèle à la vitre (10).

4. Module de toit (1) selon l'une quelconque des revendications 1 à 3, **caractérisé en ce que** les moyens de montage (30) s'étendent dans la position de montage essentiellement perpendiculairement à la vitre (10).

5. Module de toit (1) selon l'une quelconque des revendications 1 à 4, **caractérisé en ce que** les moyens de montage (30) s'étendent dans la position fonctionnelle essentiellement parallèlement à la vitre (10).

6. Module de toit (1) selon l'une quelconque des revendications 1 à 5, **caractérisé en ce que** l'axe de pivotement (X) des moyens de montage est situé directement à proximité du bord transversal arrière (104) de l'ouverture (102) lorsque la vitre (10) est connectée fixement à la partie supérieure (101) de la carrosserie.

7. Module de toit (1) selon l'une quelconque des revendications 1 à 6, **caractérisé en ce que** les moyens de montage (30) sont montés de manière déplaçable pour permettre un mouvement de pivotement à l'extrémité des moyens de guidage (40).

8. Module de toit (1) selon l'une quelconque des revendications 1 à 7, **caractérisé en ce que** les moyens de verrouillage permettent en outre de bloquer les moyens de montage (30) dans la position fonctionnelle.

9. Module de toit (1) selon l'une quelconque des revendications 1 à 8, **caractérisé en ce que** la vitre transparente à la lumière (10) est en verre.

10. Véhicule automobile (100) **caractérisé en ce qu'**il comprend un module de toit (1) selon l'une quelconque des revendications précédentes.

11. Procédé pour le montage d'un module de toit (1) selon l'une quelconque des revendications 1 à 10 sur la partie supérieure (101) d'une carrosserie de véhicule automobile (100), **caractérisé en ce qu'**il présente les étapes de procédé suivantes :
- positionnement des moyens de montage (30) dans la position de montage,
- rapprochement du module de toit (1) de la partie supérieure (101) de la carrosserie, la vitre (10) étant maintenue essentiellement parallèlement à la surface d'appui (105) qui est prévue pour la recevoir,
- introduction des moyens de montage (30) dans l'ouverture (102) dans une direction essentiellement perpendiculaire au plan s'étendant à travers ladite ouverture (102) jusqu'à ce que la vitre (10) vienne en contact avec la surface d'appui (105),
- connexion fixe de la vitre (10) à la surface d'appui (105) par collage,
- basculement des moyens de montage (30) dans la position fonctionnelle,
- blocage des moyens de montage (30) par rapport à la carrosserie du véhicule automobile (100).

12. Procédé de montage selon la revendication 11, **caractérisé en ce que** les moyens d'assombrissement sont disposés dans la position ouverte sur la partie supérieure (101) de la carrosserie du véhicule automobile (100) dans les différentes étapes de procédé du montage du module de toit (1).
